# EUROPÄISCHE PATENTSCHRIFT

(11) **EP 0 452 441 B1**
(45) Veröffentlichungstag und Bekanntmachung des Hinweises auf die Patenterteilung: **06.04.1994**
(21) Anmeldenummer: 90915435.3
(22) Anmeldetag: 18.10.1990
(51) Int. Cl.: B60T 8/48, B60T 8/44, B60T 8/34

(54) **HYDRAULISCHE BREMSANLAGE ZUR VERMEIDUNG VON HOHEN BREMS- ODER ANTRIEBSSCHLUPFWERTEN**
HYDRAULIC BRAKING INSTALLATION TO PREVENT HIGH BRAKING OR DRIVE SLIP
DISPOSITIF DE FREINAGE HYDRAULIQUE DESTINE A EVITER DES VALEURS ELEVEES DE PATINAGE AU FREINAGE OU A L'ENTRAINEMENT

(30) Priorität: 08.11.1989 DE 3937142
(43) Veröffentlichungstag der Anmeldung: 23.10.1991
(73) Patentinhaber: ITT Automotive Europe GmbH, 60488 Frankfurt (DE)
(72) Erfinder: BERISCH, Volker, D-6229 Walluf 1 (DE); LOWE, Derek, D-6246 Glashütten 1 (DE)
(86) Internationale Anmeldenummer: EP9001760
(87) Internationale Veröffentlichungsnummer: WO9107299

(56) Entgegenhaltungen:
- EP-A- 321 700
- DE-A- 3 542 689
- DE-A- 3 635 054
- GB-A- 2 182 991
- GB-A- 2 192 684

## Beschreibung

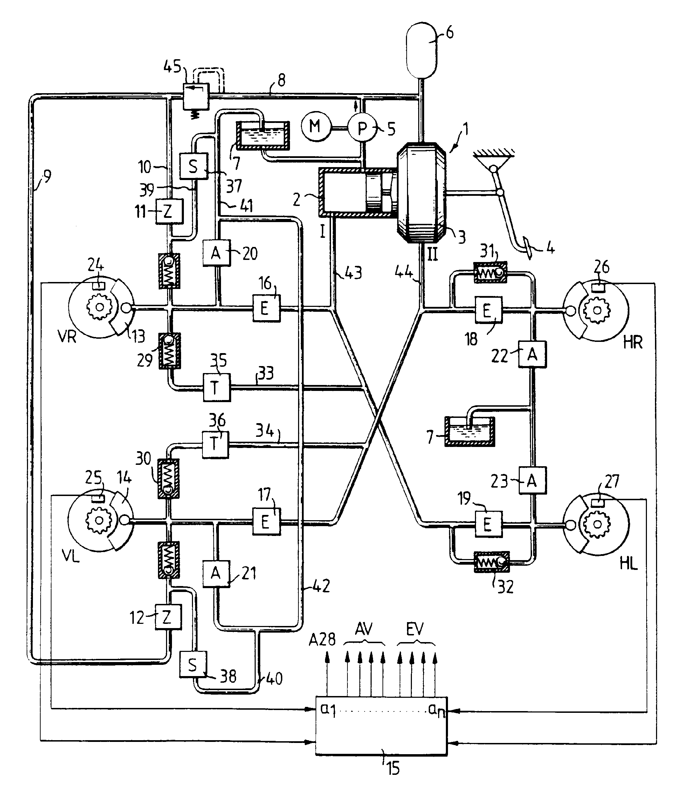

Die Erfindung bezieht sich auf eine hydraulische Bremsanlage zur Vermeidung von hohen Brems- oder Antriebsschlupfwerten gemäß dem Oberbegriff des Anspruchs 1. Eine derartige Bremsanlage ist zum Beispiel aus der DE-OS 36 35 054 bekannt. Gemäß der Figur 1 dieser Offenlegungsschrift besteht die Bremsanlage aus einem Tandem-Hauptzylinder, an den sich über verzweigende Bremsleitungen die Radbremsen anschließen. In jede Zweigleitung ist ein Einlaßventil geschaltet, das elektromagnetisch betätigt wird. Weiterhin steht jede Radbremse über eine Rücklaufleitung, in die ein Auslaßventil eingeschaltet ist mit einem Druckmittelvorratsbehälter in Verbindung. Das Auslaßventil ist ebenfalls elektromagnetisch schaltbar. Jede Arbeitskammer des Hauptzylinders steht mit einer Pumpe in Verbindung. Mit dieser Anordnung kann vermieden werden, daß die Räder bei einer Bremsung blockieren bzw. ein übermäßig hoher Bremsschlupf auftritt. Dazu werden die Ein- und Auslaßventile angesteuert. Wird das Einlaßventil geöffnet, so fließt Druckmittel aus der Pumpe in die Radbremse, so daß der Bremsdruck erhöht wird. Wird das Auslaßventil geöffnet, so fließt Druckmittel aus der Radbremse in den Druckmittelvorratsbehälter ab, so daß der Druck in der Radbremse sinkt. Durch sukzessives Ansteuern der Ein- und Auslaßventile kann ein Druck in den Radbremsen eingestellt werden, der mit den übertragbaren Kräften zwischen Reifen und Fahrbahn harmoniert, so daß das Rad einen optimalen Schlupfwert aufweist.

Schon früh wurde erkannt, daß mit derartigen blockiergeschützten Bremsanlagen auch eine Regelung des Antriebsschlupfes erfolgen kann. Dazu wurde in die Zweigleitung der Bremsleitung, die zu der Radbremse des angetriebenen Rades führt, ein Trennventil eingefügt. Die Druckmittelquelle bestehen aus Pumpe und Speicher wurde über ein Zulaufventil an die Zweigleitung zwischen dem Trennventil und dem Einlaßventil angeschlossen. Bei einer Regelung des Antriebsschlupfes, bei der das Durchdrehen der Räder vermieden werden soll, werden die Radbremsen der angetriebenen Räder unmittelbar an die Druckmittelquelle angeschlossen, wobei das Trennventil einen Rücklauf des Druckmittels in den Hauptbremszylinder verhindert. Die Druckregelung erfolgt ebenso wie bei einer Bremsschlupfregelung durch Ansteuerung der Ein- und Auslaßventile.

Diese Schaltung weist mehrere Nachteile auf.

Die Einlaßventile weisen Blenden auf, die die Geschwindigkeit des Druckanstiegs bestimmen. Eine derartige Drosselung ist notwendig, um das Regelverhalten positiv zu beeinflussen. Die optimale Drosselstärken für eine Antriebsschlupf- bzw. Bremsschlupfregelung sind unterschiedlich. Da das Einlaßventil für beide Regelungsarten wirksam ist, stellt die gewählte Blendengröße nur einen Kompromiß da, der für beide Fälle zu einer Verschlechterung der Regelqualität führt.

Weiterhin befinden sich in der Bremsleitung zwei Ventile, nämlich das Einlaßventil und das Trennventil. Auch das Trennventil weist einen nicht zu vermeidenden Drosseleffekt auf, der dazu führt, daß die Radbremsen bei einer schnellen Betätigung des Bremspedales nur verlangsamt bzw. verzögert ansprechen.

Die Erfindung beruht daher auf der Aufgabe die Ventilschaltung so zu ändern, so daß, ohne daß der Ventilaufwand vergrößert wird,in der Antriebsschlupf- und der Bremsschlupfregelung mit unterschiedlichen Drosselquerschnitten gearbeitet werden kann, und daß das Trennventil keinen störenden Einfluß auf dem Bremsdruckaufbau bei einer normalen Bremsung hat.

Die Aufgabe wird mit den Mitteln gelöst, die im kennzeichnenden Teil des Anspruchs 1 genannt sind.

Während einer Bremsschlupfregelung wird das Einlaßventil in der Bremsleitung und das Auslaßventil angesprochen. Während einer Antriebsschlupfregelung wird das Zulaufventil (als Einlaßventil) in der Druckleitung und das Auslaßventil angesprochen. Je nach dem welche Regelung vorliegt wird also ein anderes Einlaßventil angesprochen. Dies ermöglicht es, die Blenden in diesen Ventilen den jeweiligen Bedürfnissen anzupassen.

Da das Trennventil in der Bypass-Leitung zum Einlaßventil eingesetzt ist, wird während einer nichtgeregelten Bremsung lediglich das Einlaßventil von Druckmittel durchflossen. Vom Trennventil geht keine Störung aus.

Ein weiterer Vorteil besteht gegenüber dem Stand der Technik darin, daß sich nur ein Ventil in der Bremsleitung befindet. Die Wahrscheinlichkeit, daß die Bremsleitung nach einer Schlupfregelung gesperrt bleibt, weil das Ventil nicht zurückschaltet, ist deutlich kleiner, als die Wahrscheinlichkeit, daß eines von zwei Ventilen nicht zurückschaltet.

Vorzugsweise läßt sich dieses System beim Fahrzeug mit einer diagonalen Bremskreisaufteilung einsetzen. Dies bedeutet, daß die Radbremsen von diagonal am Fahrzeug gegenüberliegenden Rädern einem Bremskreis zugeordnet sind und die Räder einer Achse angetrieben werden.

In bestimmten Situationen, zum Beispiel beim Wechsel von einer Regelungsart zur anderen, kann es notwendig werden, daß der Druck in den Radbremsen sehr schnell abgebaut werden muß. Dazu ist ein Schnellentladungsventil vorgesehen, das die Radbremsen mit dem Vorratsbehälter verbindet. Dieses Schnellentladungsventil weist einen großen Öffnungsquerschnitt auf, der größer ist als der Öffnungsquerschnitt des eigentlichen Auslaßventils,

Weiterhin ist sichergestellt, daß bei einem Defekt am Zulaufventil nicht unbeabsichtigt Druck in den Radbremsen aufgebaut wird.

Im folgenden soll die Erfindung anhand eines Ausführungsbei- spiels näher verdeutlicht werden.

In der Darstellung sind schematisch vereinfacht die wichtigsten Baugruppen der erfindungsgemäßen Bremsanlage und die entsprechend hydraulische Schaltung für ein Kraftfahrzeug mit Vorderradantrieb wiedergegeben. Die Idee kann aber auch ohne weiteres für ein Kraftfahrzeug mit Hinterradantrieb eingesetzt werden.

Zu der abgebildeten Bremsanlage gehört ein zweikreisiger hydraulischer Bremsdruckgeber 1, der aus einem Hauptbremszylinder 2 und einem Bremskraftverstärker 3 besteht. Ein Bremspedal 4 zur Betätigung des Bremsdruckgebers 1 ist symbolisch dargestellt. Eine Hochdruckquelle setzt sich aus einer elektromotorisch angetriebenen Hydraulikpumpe 5 und einem Hochdruckspeicher 6 zusammen. Die Saugseite der Pumpe ist an einen Druckmittelvorratsbehälter 7 angeschlossen. Der Druckspei- cher 6 steht über einer Druckleitung 8, die sich in zwei Zweigleitungen 9 und 10 verzweigt mit den Radbremsen 13 und 14 des vorderen rechten Rades VR und des vorderne linken Rades VL in Verbindung. Jede Zweigleitung weist ein Zulaufventil 11, 12 auf das elektromagnetisch angesteuert wird und in seiner Grundstellung geschlossen ist.

Die Radbremsen 13, 14 stehen über je einem Einlaßventil 16, 17 mit dem Bremsdruckgeber 1 in Verbindung.

Die Radbremsen des hinteren rechten Rades HR und des linken hinteren Rades HL stehen über je ein Einlaßventil 18, 19 mit dem Bremsdruckgeber 1 in Verbindung. Dabei bilden die Bremsen des vorderen rechten Rades VR und des hinteren linken Rades HL dem Bremskreis I und die Radbremsen des vorderen linken Rades VL und des hinteren rechten Rades HR den Bremskreis II. Die Einlaßventile 16, 17, 18, 19 sind in je einer Zweigleitung der Bremsleitungen 43, 44 angeordnet. Den Einlaßventilen ist jeweils ein Rückschlagventil 29, 30, 31, 32 parallel geschaltet. Die Rückschlagventile öffnen zum Bremsdruckgeber 1.

Jede Radbremse steht weiterhin über ein Auslaßventil 20, 21, 22, 23 mit dem Druckmittelvorratsbehälter 7 in Verbindung. Die beiden Vorratsbehälter bilden eine Einheit und sind nur der Übersichtlichkeit halber getrennt dargestellt.

Die Bypass-Leitungen 33, 34 zu den Einlaßventilen 16 und 17, die die Rückschlagventile 29, 30 aufnehmen, verfügen weiterhin über Trennventile 35, 36, die elektromagnetisch angesteuert und in ihrer Grundstellung offen sind.

Gegebenenfalls können noch Schnellentladungsventile 37, 38 vorgesehen werden, die in Entladungsleitungen 39, 40 zwischen den Radbremsen 13, 14 und dem Vorratsbehälter 7 vorgesehen sind.

Die Schnellendladungsventile werden elektromagnetisch angesteuert und sind in ihrer Grundstellung offen. Die Zweigleitungen 9, 10 weisen Rückschlagventile auf, die zwischen den Einmündungen der Zweigleitungen in die Bremsleitungen 43, 44 und den Zulaufventilen angeordnet sind. Die Rückschlagventile öffnen zur Radbremse hin. Die Endladungsleitungen 39, 40 münden zwischen dem Zulaufventil 11 bzw. 12 und dem Rückschlagventil in die Zweigleitungen 9 bzw. 10.

Die Bremsanlage arbeitet nach dem folgenden Schema.

In der Grundstellung der Anlage sind die Einlaßventile, die Trennventile, sowie die Schnellentladungsventile geöffnet, während die Zulaufventile und die Auslaßventile geschlossen sind. Mit Betätigen des Bremspedals wird in den Bremskreisen I und II ein Druck aufgebaut, der über die Bremsleitungen 43, 44 an die Radbremsen weitergegeben wird. Der Bremsdruck bewirkt eine Verzögerung der Raddrehgeschwindigkeit und infolge eine Fahrzeugverzögerung.

Das Drehverhalten der Räder wird mittels Sensoren 24, 25, 26, 27 laufend überwacht, so daß sofort festgestellt werden kann, wenn eines der Räder zu blockieren droht.

Die Sensorsignale werden von einer elektronischen Auswerteinheit 15 erfasst, die Signale für die Ventile generiert. Um das Blockieren eines Rades zu verhindern wird das zugehörige Einlaßventil geschlossen und das zugehörige Auslaßventil geöffnet. Dies führt zu einer Druckabsenkung in der Radbremse und zu einer Wiederbeschleunigung des Rades, so daß eine erneute Druckerhöhung zulässig wird. Dazu wird das Auslaßventil wieder geschlossen und das Einlaßventil wieder geöffnet. Durch die aufeinanderfolgenden Phasen von Druckabsenkung und -erhöhung läßt sich ein Druck in der Radbremse einstellen, der mit den übertragbaren Kräften zwischen Reifen und Fahrbahn harmoniert. Die Rückschlagventile 29 - 32 haben die Aufgabe den Druck in den Radbremsen auf den Druckwert im Bremsdruckgeber 1 zu begrenzen. Löst nämlich der Fahrer während einer Bremsung das Pedal, so daß der Druck im Bremsdruckgeber gesenkt oder vollständig abgebaut wird, so öffnen die Rückschlagventile, und die Druckabsenkung wird auch in den Radbremsen wirksam. In der Regel liegt dieser Druck dann unter einen Blockierdruck, so daß die Bremsschlupfregelung beendet wird.

Die Bremsanlage kann aber auch dazu eingesetzt werden, ein Durchdrehen der Räder während eines Anfahrvorganges bzw. während der Fahrt zu verhindern. Es kann nämlich vorkommen, daß das Antriebsmoment, das vom Fahrzeugmotor an die Räder geliefert wird, größer ist als die Kräfte bzw. Momente, die vom Rad übertragen werden können. Als Folge davon würden die Antriebsräder durchdrehen und ihre Seitenführungskräfte verlieren.

Tritt ein derartiger Fall ein, so wird zunächst das Einlaß ventil 16, 17 und das Trennventil 35, 36 gesperrt. Damit sind die Radbremsen 13, 14 vom Bremsdruckgeber 1 abgekoppelt. Um nun einen Druck in der Radbremse 13, 14 aufbauen zu können, wird das Zulaufventil 11 bzw. 12 geöffnet, und die Endladungsventile 37, 38 geschlossen. Der Speicher 6 steht nun unmittelbar mit den Radbremsen in Verbindung. Gegebenenfalls sorgt ein Druckminderventil 45 dafür, daß ein maximaler Druckwert eingestellt wird. Es ist nun möglich unabhängig von einer Pedalbetätigung die Räder der angetriebenen Achse unabhängig voneinander abzubremsen. Die Antriebsschlupfregelung arbeitet im Prinzip nach dem gleichen Schema wie eine Bremsschlupfregelung. Durch Öffnen und Schließen der Zulaufventile 11, 12 bzw. der Auslaßventile 20, 21 kann der Druck erhöht und abgesenkt werden, so daß das Antriebsmoment des Fahrzeugmotors soweit kompensiert wird, daß es mit dem zwischen Reifen und Fahrbahn übertragbaren Kräften harmoniert. Die Zulaufventile 11, 12 weisen ein dem Einlaßventil 16, 17 entsprechende Funktion auf.

Den Endladungsventilen kommt die folgende Funktion zu: Wenn ein Zulaufventil defekt ist, so strömt Druckmittel aus dem Speicher in die Bremskreise und von dort in den Vorratsbehälter 7, der bei nicht betätigtem Pedal an den Hauptbremszylinder angeschlossen ist. Der Übergang vom Vorratsbehälter zum Hauptzylinder ist aber stark gedrosselt, so daß bei einer großen Leckrate am Zulaufventil ein Druck in den Bremskreisen aufgebaut wird, der nicht beabsichtigt ist. Mit dem zusätzlichen Endladungsventil ist gewährleistet, daß ausreichend Druckmittel abfließen kann. Das Rückschlagventil verhindert, daß bei einem normalen Druckaufbau, Druckmittel über das Endladungsventil entweichen kann. Diese Schaltung ist natürlich bei allen Anlagen einsetzbar, bei denen ein Speicher an die Bremsleitung mittels eines Ventils anschließbar ist.

### Bezugszeichenliste

- 1: Bremsdruckgeber
- 2: Hauptbremszylinder
- 3: Hydraulischer Verstärker
- 4: Pedal
- 5: Pumpe
- 6: Hochdruckspeicher
- 7: Druckmittelvorratsbehälter
- 8: Druckleitung
- 9: Druckzweigleitung
- 10: Druckzweigleitung
- 11: Zulaufventil Z
- 12: Zulaufventil Z
- 13: Radbremse vorne rechts
- 14: Radbremse vorne links
- 15: Elektronische Auswerteinheit
- 16: Einlaßventil E
- 17: Einlaßventil E
- 18: Einlaßventil E
- 19: Einlaßventil E
- 20: Auslaßventil A
- 21: Auslaßventil A
- 22: Auslaßventil A
- 23: Auslaßventil A
- 24: Sensor
- 25: Sensor
- 26: Sensor
- 27: Sensor
- 29: Rückschlagventil
- 30: Rückschlagventil
- 31: Rückschlagventil
- 32: Rückschlagventil
- 33: Bypass-Leitung
- 34: Bypass-Leitung
- 35: Trennventil T
- 36: Trennventil T
- 37: Schnellentladungsventil
- 38: Schnellentladungsventil
- 39: Entladungsleitung
- 40: Entladungsleitung
- 41: Rücklaufleitung
- 42: Rücklaufleitung
- 43: Bremsleitung
- 44: Bremsleitung
- 45: Druckminderventil

## Patentansprüche

1. Hydraulische Bremsanlage für Kraftfahrzeuge zur Vermeidung von hohen Brems- oder Antriebsschlupfwerten mit einem Bremsdruckgeber (1), einer Hochdruckquelle (5, 6), mindestens einem Bremskreis (I), der die Radbremsen von angetriebenen und nicht angetriebenen Rädern umfasst, wobei jeder Radbremse ein Einlaßventil (16) in der Bremsleitung (43) zwischen der Radbremse und dem Bremsdruckgeber (1) und ein Auslaßventil (20) in der Rücklaufleitung (41) zwischen der Radbremse und einen Druckmittelvorratsbehälter (7) zugeordnet ist, mit einem Rückschlagventil (29) in einer Bypass-Leitung (33) zum Einlaßventil (16), das zum Bremsdruckgeber (1) hin öffnet, einem Zulaufventil (11) in der Druckleitung (10) zwischen der Radbremse des angetriebenen Rades und der Hochdruckquelle (5, 6) und einem Trennventil (35) in der Bremsleitung zwischen der Radbremse des angetriebenen Rades und den Bremsdruckgeber (1), dadurch gekennzeichnet, daß die das Zulaufventil (11) aufweisende Druckleitung (10) zwischen dem Einlaßventil (16) und der Radbremse in eine Zweigleitung zur Bremsleitung (43) eines Bremskreises (I, II) mündet und daß das Trennventil (35) in der zum Einlaßventil (16) angeordneten Bypass-Leitung (33) vorgesehen ist.

2. Hydraulische Bremsanlage nach Anspruch 1, dadurch gekennzeichnet, daß die Bremsanlage zweikreisig (Bremskreis I, Bremskreis II) ausgelegt ist, wobei jedem Bremskreis die Radbremsen von diagonal am Fahrzeug gegenüberliegenden Rädern zugeordnet sind, und daß die Räder einer Achse angetrieben werden.

3. Bremsanlage nach Anspruch (1) dadurch gekennzeichnet, daß den Radbremsen der angetriebenen Räder Schnellentladungsventile (37, 38) zugeordnet sind, die einen großen Öffnungsquerschnitt aufweisen und die in einer Entladungsleitung (39, 40) zwischen der Radbremse und dem Druckmit- telvorratsbehälter (7) angeordnet sind.

4. Bremsanlage nach Anspruch (1) dadurch gekennzeichnet, daß die Hochdruckquelle aus einer Pumpe (5) und einem Hochdruckspeicher (6) besteht, wobei die Pumpe (5) mit ihrer Saugleitung an den Druckmittelvorratsbehälter (7) angeschlossen ist.

## Claims

1. A hydraulic brake system for use with automotive vehicles for avoiding high brake slip values or traction slip values, including a brake pressure generator (1), a high-pressure source (5, 6), at least one brake circuit (I) comprising the wheel brakes of driven and non-driven wheels, with an inlet valve (16) in the brake conduit (43) between the wheel brake and the brake pressure generator (1), and an outlet valve (20) in the return conduit (41) between the wheel brake and a pressure fluid reservoir (7) being associated with each wheel brake, including a check valve (29) in a bypass line (33) to the inlet valve (16) opening toward the brake pressure generator (1), an intake valve (11) in the pressure conduit (10) between the wheel brake of the driven wheel and the high-pressure source (5, 6) and a separator valve (35) in the brake conduit between the wheel brake of the driven wheel and the brake pressure generator (1),
**characterized** in that the pressure conduit (10) which contains the intake valve (11) terminates between the inlet valve (16) and the wheel brake into a branch conduit to the brake conduit (43) of a brake circuit (I, II), and in that the separator valve (35) is provided in the bypass conduit (33) arranged in relation to the inlet valve (16).

2. A hydraulic brake system as claimed in claim 1,
**characterized** in that the brake system is of dual-circuit configuration (brake circuit I, brake circuit II), each brake circuit being associated with the wheel brakes of diagonally opposed wheels on the vehicle, and in that the wheels of one axle are driven.

3. A hydraulic brake system as claimed in claim 1,
**characterized** in that high-speed discharge valves (37, 38) are associated with the wheel brakes of the driven wheels, which valves have a large opening cross-section and are located in a discharge conduit (39, 40) between the wheel brake and the pressure fluid reservoir (7).

4. A brake system as claimed in claim 1,
**characterized** in that the high-pressure source comprises a pump (5) and a high-pressure accumulator (6), with the pump (5) along with its intake conduit being in communication with the pressure fluid reservoir (7).

## Revendications

1. Système hydraulique de freinage pour véhicules automobiles destiné à éviter les valeurs élevées de patinage au freinage ou à l'entraînement, comprenant un maître-cylindre (1) de pression de freinage, une source (5, 6) de haute pression, au moins un circuit de freinage (I) contenant les freins de roue de roues entraînées et non entraînées, chaque frein de roue étant associé à un clapet d'admission (16) disposé dans chaque conduite de frein (43), entre le frein de roue et le maître-cylindre (1) de pression de freinage, et un clapet de sortie (20) disposé dans la conduite de retour (41), entre le frein de roue et un réservoir (7) de fluide de pression, et comprenant un clapet de non-retour (29) disposé dans une conduite (33) de dérivation du clapet d'admission (16), le clapet de non-retour ouvrant en direction du maître-cylindre (1) de pression de freinage, un clapet de réalimentation (11) disposé dans la conduite de pression (10), entre le frein de roue de la roue motrice et la source de haute pression (5, 6), et un clapet d'isolement (35) disposé dans la conduite de frein, entre le frein de roue de la roue motrice et le maître-cylindre (1) de pression de freinage,
caractérisé en ce que la conduite de pression (10) comportant le clapet de réalimentation (11) débouche, entre le clapet d'admission (16) et le frein de roue, dans une conduite d'embranchement rejoignant la conduite de frein (43) d'un circuit de frein (I, II), et en ce que le clapet d'isolement (35) est prévu dans la conduite (33) de dérivation du clapet d'admission (16).

2. Système hydraulique de freinage selon la revendication 1, caractérisé en ce que le système de freinage est conçu sous forme d'un système à double circuit (circuit de frein I, circuit de frein II), à chaque circuit de frein étant associés les freins de roue de roues diagonalement opposées du véhicule, et en ce que les roues d'un essieu sont entraînées.

3. Système de freinage selon la revendication 1, caractérisé en ce que des clapets de décharge rapide (37, 38) sont associés aux freins de roue des roues motrices, ces clapets présentant une aire d'ouverture importante et étant disposés dans une conduite de décharge (39, 40) entre le frein de roue et le réservoir (7) de fluide de pression.

4. Système de freinage selon la revendication 1, caractérisé en ce que la source de haute pression est composée d'une pompe (5) et d'un accumulateur (6) à haute pression, la conduite d'aspiration de la pompe (5) étant raccordée au réservoir (7) de fluide de pression.
